# EUROPEAN PATENT SPECIFICATION

(11) **EP 4 465 431 B1**
(45) Date of publication and mention of the grant of the patent: **11.11.2026**
(21) Application number: 23900807.1
(22) Date of filing: 19.07.2023
(51) Int. Cl.: H01M 50/383, H01M 10/658, H01M 50/30, H01M 50/249, H01M 50/271, H01M 50/503

(54) **BATTERY MODULE, AND BATTERY PACK AND VEHICLE COMPRISING SAME**
BATTERIEMODUL SOWIE BATTERIEPACK UND FAHRZEUG DAMIT
MODULE DE BATTERIE, BLOC-BATTERIE ET VÉHICULE LE COMPRENANT

(30) Priority: 08.12.2022 KR 20220170908; 23.03.2023 KR 20230038010
(43) Date of publication of application: 20.11.2024
(73) Proprietor: LG Energy Solution, Ltd., Seoul 07335 (KR)
(72) Inventor: PARK, Jeong-Hoon, Daejeon 34122 (KR); KIM, Soo-Youl, Daejeon 34122 (KR); JUNG, Hye-Mi, Daejeon 34122 (KR)
(74) Representative: Plasseraud IP
(86) International application number: PCT/KR2023/010447
(87) International publication number: WO 2024/122785

(56) References cited:
- EP-A1- 4 087 039
- CN-U- 217 035 887
- KR-A- 20190 122 474
- KR-A- 20210 122 511
- KR-A- 20220 073 664
- US-A1- 2022 123 423

## Description

### TECHNICAL FIELD

The present disclosure relates to a battery module, and a battery pack and a vehicle comprising the battery module, and more particularly, to a battery module with improved safety against thermal events and a battery pack and a vehicle comprising the battery module.

The present application claims priority to Korean Patent Application No. 10-2022-0170908 filed on December 8, 2022 and Korean Patent Application No. 10-2023-0038010 filed on March 23, 2023 in the Republic of Korea.

### BACKGROUND ART

Due to being easily applicable to various products and having electrical properties such as high energy density, secondary batteries are commonly applied to not only portable devices but also electric vehicles (EVs) or hybrid electric vehicles (HEVs) that are driven by an electrical driving source. Secondary batteries remarkably reduce the use of fossil fuels, and in addition to the primary advantage, they do not generate by-products from the use of energy. From this perspective, secondary batteries are seen as a new source of energy with eco-friendliness and energy efficiency.

The types of secondary batteries widely used at present include lithium ion batteries, lithium polymer batteries, nickel cadmium batteries, nickel hydrogen batteries, nickel zinc batteries or the like. A unit secondary battery cell or a unit battery cell has an operating voltage of about 2.5V to 4.5V. Accordingly, when higher output voltage is required, a plurality of battery cells may be connected in series to form a battery pack. Additionally, the battery pack may be fabricated by connecting the plurality of battery cells in parallel according to the charge/discharge capacity required for the battery pack. Accordingly, the number of battery cells included in the battery pack may be variously set depending on the required output voltage or charge/discharge capacity.

Meanwhile, when fabricating the battery pack by connecting the plurality of battery cells in series/in parallel, it is general to make a battery module including at least one battery cell, and then make a battery pack or a battery rack using at least one battery module with an addition of any other component.

However, the plurality of secondary batteries (battery cells) or the plurality of battery modules densely arranged in a narrow space may be vulnerable to thermal events. **In** particular, when an event such as thermal runaway occurs in any one battery cell, high temperature gases, flames or heat may be produced. When gases, flames or heat are transferred to other battery cells included in the same battery module, explosive chain reaction such as thermal propagation may occur. Additionally, the chain reaction may cause an accident such as fire or explosion in not only the corresponding battery module but also other battery module.

Moreover, medium and large-scale battery packs for electric vehicles include a large number of battery cells and a large number of battery modules to increase the output and/or capacity, and have a higher risk of thermal chain reaction. Besides, the battery packs for electric vehicles may be mounted near users such as drivers. When it fails to adequately control a thermal event in a specific battery module, causing chain reaction, not only economic loss but also human loss may occur.

Accordingly, there is a need for an approach to provide battery modules with improved safety against thermal events.

Document EP 4 087 039 A1 relates to a battery module configured such that a partition wall and an air thermal insulation layer are provided between cell stacks or between a cell stack and a side cover, whereby ignition conditions are prevented and thus outbreak of fire is inhibited, and, even when fire breaks out, transfer of the fire to a neighboring cell stack is prevented.

Document KR 2022 0073664 A relates to a battery module with enhanced stability and a battery pack including the same.

Document KR 2019 0122474 A relates to a battery pack to which a gas flow path capable of smoothly discharging gas generated from battery cells to the outside is applied.

Document US 2022/123423 A1 relates to the technical field of energy storage devices, and in particular, to a battery pack and an apparatus.

Document CN 217 035 887 U relates to the technical field of battery pressure relief, and in particular, to a pressure relief valve assembly, a battery pack and a vehicle.

Document KR 2021 0122511 A relates to a battery module and a battery pack including the same, and more particularly, to a battery module with enhanced stability and a battery pack including the same.

### SUMMARY

### Technical Problem

Accordingly, the present disclosure is directed to providing a battery module with improved safety against thermal events and a battery pack and a vehicle comprising the same.

However, the technical problem to be solved by the present disclosure is not limited to the above-described problems, and these and other problems will be clearly understood by those skilled in the art from the following description.

### Technical Solution

To achieve the above-described objective, the present invention provides a battery module in accordance with claim 1. Preferred embodiments are defined in dependent claims 2-7.

In addition, the present invention provides a battery pack as defined in claim 8.

Furthermore, the present invention provides a vehicle comprising the battery pack as defined in claim 9.

### Advantageous Effects

According to the above-described embodiments, it may be possible to provide battery modules with improved safety against thermal events and battery packs and vehicles comprising the same.

Specifically, through the busbar cover that covers one surface of the busbar frame according to various embodiments of the present disclosure and a portion of the cell assembly adjacent to the busbar frame, it may be possible to prevent the structure from being destroyed by flames due to thermal runaway when thermal events occur.

Additionally, through the busbar cover according to various embodiments of the present disclosure, it may be possible to prevent gases or flames from coming out near the cell assembly and the busbar assembly disposed on two sides of the battery module excluding the vent of the module case and guide directional venting of gases or flames toward the vent.

The present disclosure may have many other effects, and they will be described in each embodiment, and regarding the effect that may be easily anticipated by those skilled in the art, the corresponding description is omitted.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus the present invention object of the attached claims should not be construed as being limited to the drawings.
FIG. 1 is a perspective view of a battery module according to an embodiment of the present disclosure.
FIG. 2 is a partial exploded perspective view of the battery module of FIG. 1.
FIG. 3 is a side cross-sectional view of the battery module of FIG. 1.
FIGS. 4 and 5 are diagrams illustrating a busbar cover of a busbar assembly of the battery module of FIG. 2.
FIGS. 6 to 8 are diagrams illustrating a movement path blocking mechanism of flames or gases through a busbar cover when a thermal event occurs in a battery cell of the battery module of FIG. 1.
FIG. 9 is a diagram illustrating a busbar cover of a busbar assembly according to another embodiment of the present disclosure.
FIG. 10 is a diagram illustrating a busbar cover of a busbar assembly according to still another embodiment of the present disclosure.
FIG. 11 is a diagram illustrating a battery pack according to an embodiment of the present disclosure.
FIG. 12 is a diagram illustrating a vehicle according to an embodiment of the present disclosure.

### DETAILED DESCRIPTION

Hereinafter, exemplary embodiments of the present disclosure will be described in detail with reference to the accompanying drawings.

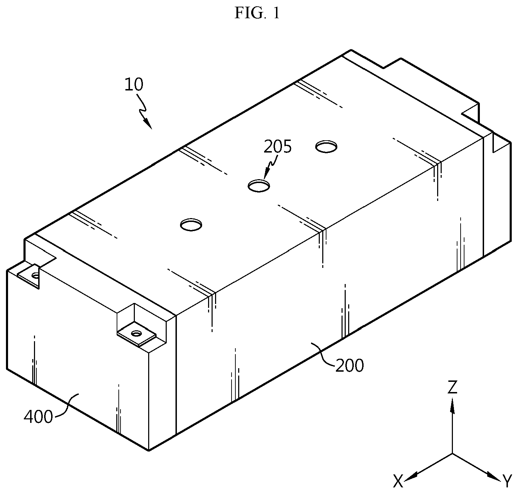

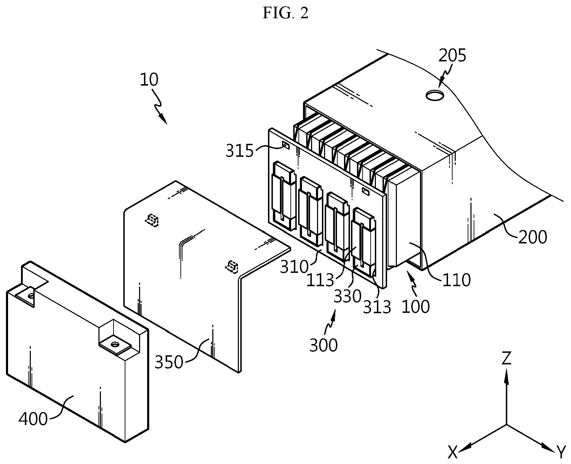

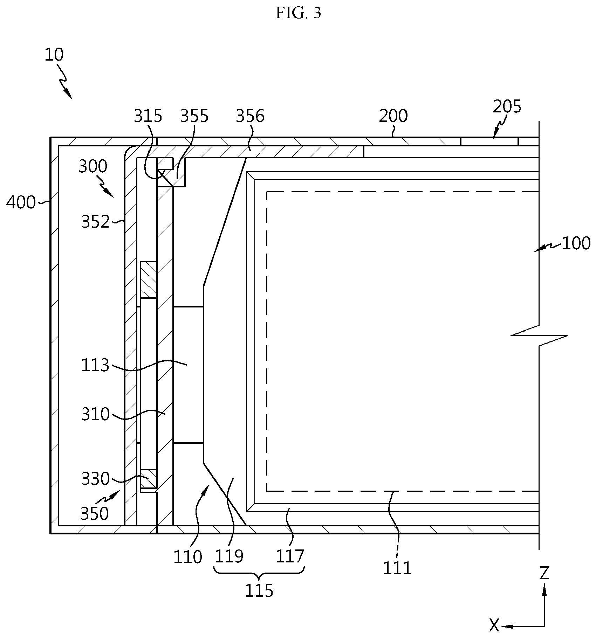

FIG. 1 is a perspective view of a battery module 10 according to an embodiment of the present disclosure, FIG. 2 is a partial exploded perspective view of the battery module 10 of FIG. 1, and FIG. 3 is a side cross-sectional view of the battery module 10 of FIG. 1.

Referring to FIGS. 1 to 3, the battery module 10 may include a cell assembly 100, a module case 200 and a busbar assembly 300.

The cell assembly 100 may include a plurality of battery cells 110. The plurality of battery cells 110 may be pouch type secondary batteries, and may be stacked to form the cell assembly 100. The components of each battery cell 110 will be described in more detail in the following related description. Although not shown, the cell assembly 100 may further include a cooling fin interposed between the battery cells 110 or a compression pad configured to control cell swelling of the battery cells 110.

The module case 200 may accommodate the cell assembly 100. To this end, the module case 200 may have a predetermined accommodation space for accommodating the cell assembly 100.

The module case 200 may have a vent 205 to force out flames or gases. The vent 205 may break or melt at or above a predetermined temperature or a predetermined pressure to vent high temperature gases or flames. When a thermal event, for example, a thermal runaway situation occurs in the battery cell 110 due to overheating of the battery cell 110, the vent 205 is configured to force high temperature gases, flames or particles from the overheated battery cell 110 out the module case 200, and when the thermal event occurs, may break or melt from the module case 200 to force high temperature gases such as venting gases or flames out the module case 200 more quickly.

The busbar assembly 300 is configured to sense the voltage of the plurality of battery cells 110 of the cell assembly 100, and may be electrically connected to the plurality of battery cells 110. In this embodiment, the busbar assembly 300 may be disposed on two sides (X axis direction) of the module case 200.

The busbar assembly 300 is connected to the module case 200 spaced apart from the vent 205. Additionally, the busbar assembly 300 is configured to cover a portion of the cell assembly 100 in which electrode leads 113 of the battery cells 110 are disposed in two adjacent directions in the module case 200.

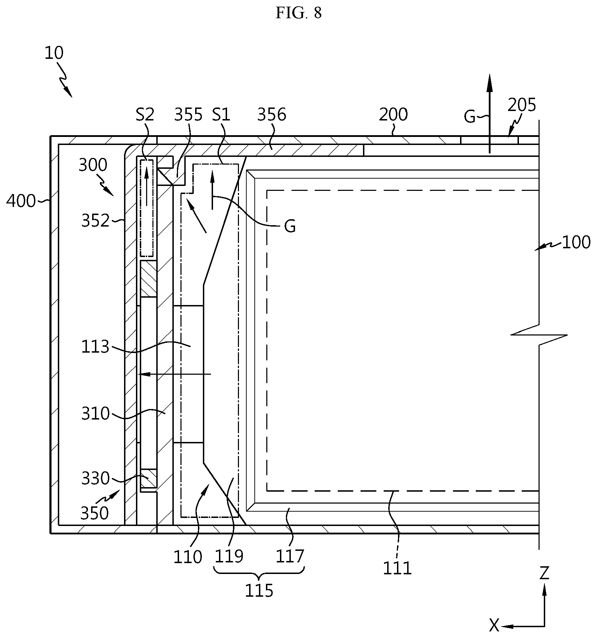

In the area in which the electrode leads 113 are disposed in the battery cell 110, a predetermined step exits by the unique shape of the pouch type secondary battery. The step results from a height difference between a case body 117 and a case terrace 119 of a cell case 115 that forms the appearance of the battery cell 110 as described in the structure of the battery cell 110 as described below. Since sealing is performed by heat welding with the electrode leads 113 extended from the cell case 115, the predetermined step is formed between the case terrace 119 and the case body 117 accommodating an electrode assembly 111. Due to the step between the case body 117 and the case terrace 119, in the portion of the cell assembly 100 in which the electrode leads 113 of the battery cells 110 are disposed, a predetermined space S1 (see FIG. 8) is formed by the step.

When the thermal event occurs, the predetermined space S1 (see FIG. 8) may accelerate the convection in the gases, flames or particles. As a consequence, an unintended venting of gases, flames or particles may occur in a portion of the module case 200 near the predetermined space S1, not the vent 205 of the module case 200.

Since the busbar assembly 300 of the present disclosure is configured to cover the portion of the cell assembly 100 in which the electrode leads 113 of the battery cells 110 are disposed in two adjacent directions in the module case 200, it may be possible to prevent the gases, flames or particles from moving due to convection in the predetermined space S1 earlier than the module case 200 when the thermal event occurs.

Accordingly, through the busbar assembly 300 of the present disclosure, it may be possible to block the movement path of gases, flames or particles in the predetermined space S1 or the portion of the cell assembly 100 in which the electrode leads 113 of the battery cells 110 are disposed earlier than the module case 200, and effectively prevent the venting of gases, flames or particles from the other portion of the module case 200, not the vent 205 of the module case 200.

Additionally, through the busbar assembly 300 of the present disclosure, when the thermal event occurs, it may be possible to guide the smooth movement of gases, flames or particles to the vent 205, thereby effectively guiding directional venting in a specific direction. Meanwhile, the directional venting will be described in more detail in the following related description.

Hereinafter, the busbar assembly 300 according to this embodiment will be described in more detail.

The busbar assembly 300 may include a busbar frame 310, a sensing busbar 330 and a busbar cover 350.

The busbar frame 310 may be disposed facing the cell assembly 100. The busbar frame 310 may allow the electrode leads 113 of the battery cells 110 to pass through. To allow the electrode leads 113 to pass through, the busbar frame 310 may have a lead slot 313 having a predetermined opening and width. Additionally, the number of lead slots 313 corresponding to the number of electrode leads 113 may be provided. The electrode leads 113 of the battery cells 110 may pass through the corresponding lead slots 313 and connect to the sensing busbar 330 as described below in a surface opposite the surface facing the cell assembly 100.

The sensing busbar 330 may be connected to the electrode leads 113 of the battery cells 110. The sensing busbar 330 may be disposed on one surface of the busbar frame 310. The one surface of the busbar frame 310 may be the surface opposite the surface facing the cell assembly 100. The electrode leads 113 may pass through the lead slots 313, then bend and connect to the sensing busbar 330 through laser welding.

The busbar cover 350 is configured to cover one surface of the busbar frame 310 and the portion of the cell assembly 100 adjacent to the busbar frame 310 in the module case 200. Here, one surface of the busbar frame 310 and the portion of the cell assembly 100 adjacent to the busbar frame 310 in the module case 200 may be the portion of the cell assembly 100 in which the electrode leads 113 of the battery cells 110 are disposed in the module case 200. In the cell assembly 100, the case terrace 119 of the cell case 115 as described below is disposed in the area adjacent to the busbar frame 310, and for the connection to the sensing busbar 330, the end portions of the electrode leads 113 of the battery cells 110 is exposed through one surface of the busbar frame 310.

As described above, in an embodiment of the present disclosure, through the busbar cover 350, it may be possible to prevent vent materials such as gases, flames or particles from moving due to convection and guide the vent materials to the vent 205 of the module case 200, thereby guiding the directional venting.

Hereinafter, the directional venting of the present disclosure will be described in more detail.

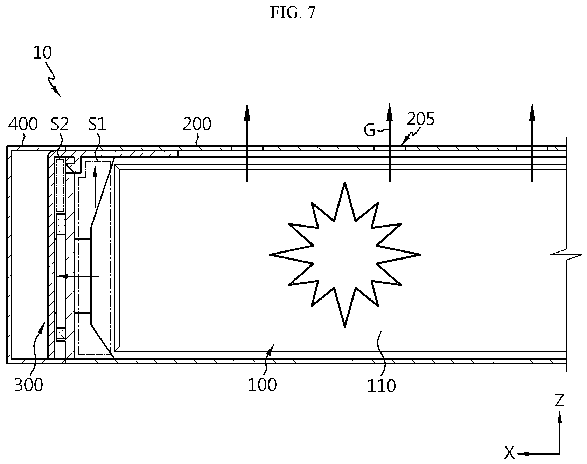

The battery module 10 of the present disclosure has a top venting structure, i.e., a directional venting structure through the top of the battery cells 110 (+Z axis direction). For the top venting, the cell vent that breaks or melts at or above the predetermined temperature or the predetermined pressure may be formed on top of the battery cells 110 of the cell assembly 100. Additionally, the components related to fire suppression or fire extinguishing function may be disposed on top of the battery module 10 (+Z axis direction) to control the vent materials G (see FIG. 7) such as gases flames or particles escaping from the top of the battery module 10 (+Z axis direction).

For the top directional venting, the vent 205 of the module case 200 may be disposed in the upper surface of the module case 200. Specifically, the vent 205 may be disposed near the center of the upper surface of the module case 200, and a single vent 205 or multiple vents 205 may be provided. Hereinafter, this embodiment will be described based on the plurality of vents 205 disposed near the center of the upper surface of the module case 200.

The busbar cover 350 is spaced apart from the vent 205, and may cover the edge top on two sides of the cell assembly 100 (+X axis direction). Accordingly, the busbar cover 350 of the present disclosure may cover the edge top on the two sides of the cell assembly 100 in the module case 200 to prevent the vent materials such as gases from moving to the two edges of the module case 200 (X axis direction) and guide the vent materials such as gases toward the vent 205 near the center of the upper surface of the module case 200.

Accordingly, through the busbar cover 350 according to this embodiment, it may be possible to effectively guide the directional venting of the vent materials such as gases toward the vent 205 of the module case 205 formed for the top venting structure.

Hereinafter, the plurality of battery cells 110 of the cell assembly 100, specifically, the pouch type secondary batteries will be described in more detail.

Each of the plurality of battery cells 110 may include the electrode assembly 111, the pair of electrode leads 113 and the cell case 115.

The electrode assembly 111 may include a positive electrode plate, a negative electrode plate and a separator. The electrode assembly 111 is well known, and hereinafter, its detailed description is omitted.

The pair of electrode leads 113 may be connected to the electrode assembly 111, and may extend to a predetermined length from the cell case 115 as described below. The pair of electrode leads 113 may be connected to the sensing busbar 330 for electrical connection to the busbar assembly 300.

The cell case 115 may form the appearance of the battery cell 110, and accommodate the electrode assembly 111 and a portion of the electrode leads 113. The cell case 115 may include the case body 117 and the case terrace 119.

The case body 117 may accommodate the electrode assembly 111 and the portion of the electrode leads 113. To this end, the case body 117 may have an accommodation space for accommodating the electrode assembly 111 and the portion of the electrode leads 113.

The case terrace 119 may extend from the case body 117, and the pair of electrode leads 113 may extend to the predetermined length from the case terrace 119. The case terrace 119 is a part for sealing of the cell case 115, and may be sealed through heat welding to make the case body 117 airtight. Accordingly, the case terrace 119 and the case body 117 may have the predetermined step as described above. Accordingly, the cell assembly 100 may have the predetermined space S1 (see FIG. 8) due to the step between the case body 117 and the case terrace 119 where the electrode leads 113 of the battery cells 110 extend.

A portion of the busbar cover 350 may be disposed between the module case 200 and the case terraces 119 where the pair of electrode leads 113 of the plurality of battery cells 110 extend. In other words, the portion of the busbar cover 350 may be disposed between the module case 200 and the predetermined space S1 (see FIG. 8) formed by the step between the case body 117 and the case terrace 119. More specifically, the portion of the busbar cover 350 may be disposed in the top edge inner walls of the module case 200 to cover the predetermined space S1 (see FIG. 8).

Accordingly, in an embodiment of the present disclosure, through the busbar cover 350, when the thermal event occurs in the battery cell 110, it may be possible to block the vent materials such as high temperature gases, flames or particles emitted from the battery cell 110 rising due to convection in the predetermined space S1 (see FIG. 8) earlier than the module case 200. Accordingly, in an embodiment of the present disclosure, through the busbar cover 350, it may be possible to effectively prevent the risk that the vent materials may leak out of the top edge of the module case 200 due to convection in the predetermined space S1 (see FIG. 8).

Hereinafter, the busbar cover 350 according to this embodiment will be described in more detail.

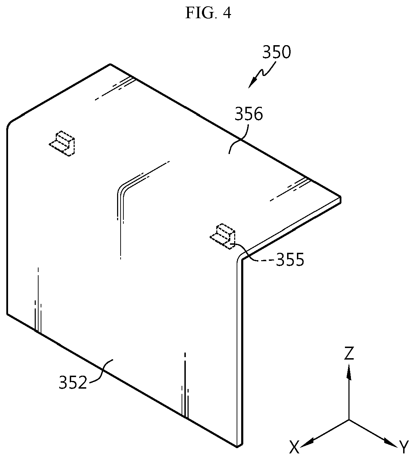

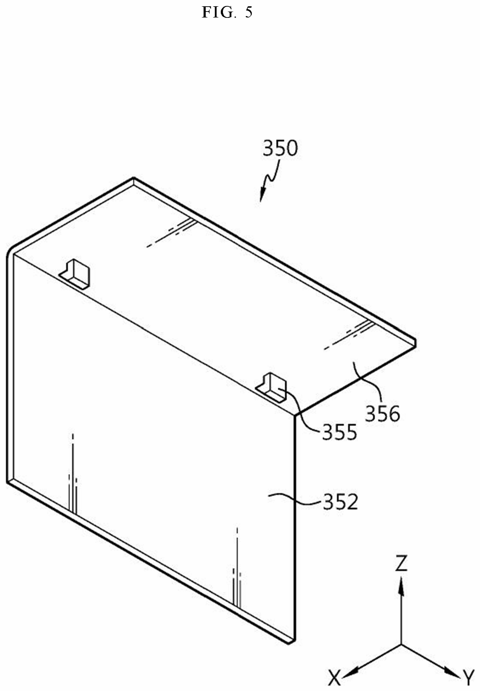

FIGS. 4 and 5 are diagrams illustrating the busbar cover 350 of the busbar assembly 300 of the battery module 10 of FIG. 2.

Referring to FIGS. 4 and 5 and FIGS. 1 to 3, the busbar cover 350 may include a first cover 352 and a second cover 356.

The first cover 352 covers one surface of the busbar frame 310. The first cover 352 may have a sufficient area to completely cover one surface of the busbar frame 310.

The second cover 356 extends integrally from the first cover 352 and bend approximately vertically from the first cover 352. Accordingly, the busbar cover 350 may have an approximately L-shaped shape as an integral structure. The second cover 356 covers the portion of the cell assembly 100 adjacent to the busbar frame 310.

As described above, the busbar cover 350 according to an embodiment of the present disclosure may have the integral bent structure of the first cover 352 and the second cover 356, and may be a single member covering the busbar frame 310 and the portion of the cell assembly 100 adjacent to the busbar frame 310.

Meanwhile, the busbar cover 350 may be hook-coupled to the busbar frame 310. Specifically, the busbar cover 350 may be hook-coupled to the top of the busbar frame 310. For the hook-coupling, the busbar cover 350 may have a coupling hook 355. The coupling hook 355 may be formed in the bottom inner surface of the second cover 356, and a pair of the coupling hooks 355 may be provided and arranged spaced a predetermined distance apart from each other. Additionally, the busbar frame 310 may have a pair of hook holes 315 into which the pair of coupling hooks 355 are inserted. The coupling hooks 355 may be formed near the bent part of the first cover 352 spaced a predetermined distance apart from the end portion of the second cover 356 to prevent the coupling hooks 355 from slipping through the hook holes 315 after coupled with the hook holes 315.

As described above, in an embodiment of the present disclosure, the busbar cover 350 and the busbar frame 310 may be connected through the hook-coupling, thereby simplifying the coupling structure of the busbar cover 350 and the busbar frame 310 and increasing the assembly process efficiency.

The busbar cover 350 may be made of a flame retardant plastic. Specifically, the busbar cover 350 may be a plastic injection product including a flame retardant material. Through the busbar cover 350, it may be possible to improve the flame retardancy of the battery module 10 and minimize the increase of weight caused by the addition of the busbar cover 350, thereby contributing to the weight reduction of the battery module 10.

Additionally, in an embodiment of the present disclosure, the busbar frame 310 may be made of the same material as the busbar cover 350. That is, the busbar frame 310 may be also a plastic injection product including a flame retardant material. Accordingly, in an embodiment of the present disclosure, it may be possible to improve the flame retardancy of the entire busbar assembly 300 and contribute to the weight reduction of the busbar assembly 300 structure, thereby reducing the total weight of the battery module 10. Furthermore, in an embodiment of the present disclosure, the busbar frame 310 and the busbar cover 350 are made using the same material and manufacturing method, so it may be possible to simplify the assembly process of the entire battery module 10, thereby significantly increasing the overall process efficiency.

Hereinafter, the movement path blocking mechanism of flames or gases through the busbar cover 350 according to an embodiment of the present disclosure will be described in more detail.

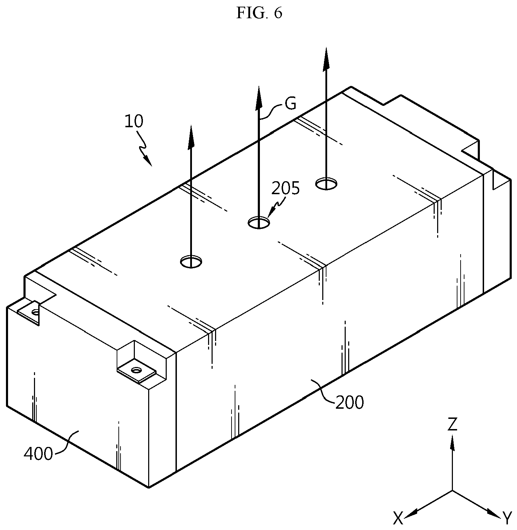

FIGS. 6 to 8 are diagrams illustrating the movement path blocking mechanism of flames or gases through the busbar cover 350 when the thermal event occurs in the battery cell 110 of the battery module 10 of FIG. 1.

Referring to FIGS. 6 to 8, when the thermal event occurs in the battery module 10, the vent materials G such as high temperature flames, gases or particles may be generated from at least some battery cells 110 of the cell assembly 100. In case where the vent materials G such as high temperature flames, gases or particles reside in the module case 200, thermal runaway may result in dangerous situations such as explosion in the entire battery module 10. Accordingly, it is necessary to quickly vent the vent materials G such as high temperature flames, gases or particles out of the module case 200 when the thermal event occurs. However, in case where the vent direction of the vent materials G is different, it is very dangerous, so it is important to control the vent direction of the vent materials G. In the present disclosure, through the vent 205 disposed near the center of the upper surface of the module case 200, the vent materials G may be only directed towards the center of the upper part of the module case 200.

However, the vent materials G such as high temperature flames, gases or particles may move to the edge area on two sides of the module case 200 due to convection in the predetermined space S1 formed by the step between the case body 117 and the case terrace 119 of the cell case 115 of the cell assembly 100. In this instance, the busbar cover 350 may block the vent materials G in the predetermined space S1 earlier than the module case 200, thereby effectively preventing the vent materials G from moving to the edge on two sides of the module case 200. Additionally, since the movement of the vent materials G to the edge on two sides of the module case 200 is blocked through the busbar cover 350, the vent materials G may be forced to move to the center of the upper surface of the module case 200 having the vent 205. Accordingly, through the busbar cover 350 according to an embodiment of the present disclosure, it may be possible to guide the directional venting of the vent materials G to the center of the upper surface of the module case 200.

Meanwhile, the vent materials G in the predetermined space S1 may move out of one surface of the busbar frame 310 through the lead slots 313 of the busbar frame 310. That is, the vent materials G may also move to a predetermined space S2 on one surface of the busbar frame 310 shown in FIG. 8 by the action of convection. Since the busbar cover 350 according to an embodiment of the present disclosure also covers one surface of the busbar frame 310, it may be possible to block the vent materials G having moved to the predetermined space S2 on one surface of the busbar frame 310 earlier than the module case 200.

Accordingly, the busbar cover 350 according to an embodiment of the present disclosure may block the vent materials G such as high temperature gases, flames or particles rising due to convection in the edge area on two sides of the module case 200 earlier than the module case 200, thereby significantly reducing the risk that the vent materials G are vented from the two edge areas of the module case 200.

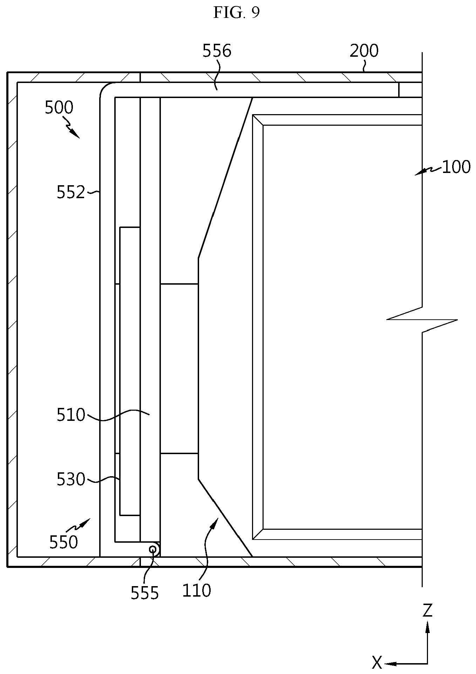

FIG. 9 is a diagram illustrating a busbar cover 550 of a busbar assembly 500 according to another embodiment of the present disclosure.

The busbar assembly 500 according to this embodiment is similar to the busbar assembly 300 of the previous embodiment, and in describing the components that are substantially identical or similar to the previous embodiment, redundant description is omitted, and hereinafter, difference(s) between this embodiment and the previous embodiment will be described.

Referring to FIG. 9, the busbar assembly 500 may include a busbar frame 510, a sensing busbar 530 and a busbar cover 550.

The busbar frame 510 may be hinge-coupled to the busbar cover 550 as described below. The hinge coupling structure will be described in detail in the following related description of the busbar cover 550.

The sensing busbar 530 is similar to the sensing busbar 330 of the previous embodiment, and hereinafter, redundant description is omitted.

The busbar cover 550 may be hinge-coupled to the busbar frame 510. Specifically, the busbar cover 550 may be hinge-coupled to the bottom of the busbar frame 510.

Hereinafter, the structure of the busbar cover 550 related to the hinge coupling will be described in more detail.

The busbar cover 550 may include a first cover 552 and a second cover 556. A hinge portion 555 may be disposed at a lower portion of the first cover 552. The hinge portion 555 may rotatably connect the first cover 552 from the busbar frame 510. In the same way as the previous embodiment, the second cover 556 may bend and extend from the first cover 552.

As described above, the busbar cover 550 may be connected to the busbar frame 510 through the hinge coupling structure. The hinge coupling structure may also simplify the coupling structure between the busbar cover 550 and the busbar frame 510, thereby increasing the convenience of the assembly process.

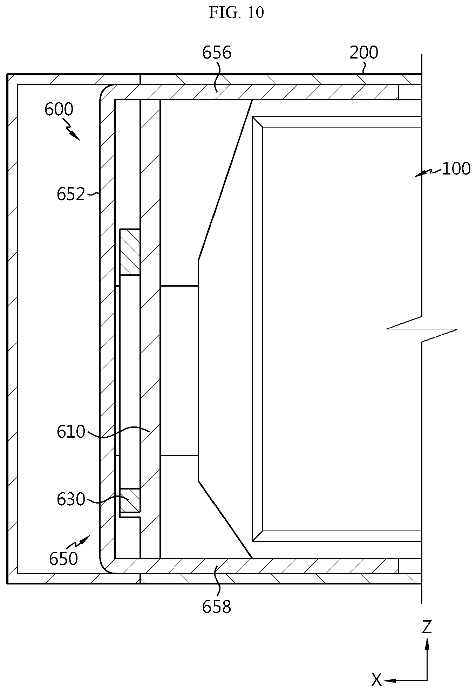

FIG. 10 is a diagram illustrating a busbar cover 650 of a busbar assembly 600 according to still another embodiment of the present disclosure.

The busbar assembly 600 according to this embodiment is similar to the busbar assembly 300 of the previous embodiment, and in describing the components that are substantially identical or similar to the previous embodiment, redundant description is omitted, and hereinafter, difference(s) between this embodiment and the previous embodiment will be described.

Referring to FIG. 10, the busbar assembly 600 may include a busbar frame 610, a sensing busbar 630 and a busbar cover 650.

The busbar frame 610 and the sensing busbar 630 are similar to those of the previous embodiment, and hereinafter, redundant description is omitted.

The busbar cover 650 may include a first cover 652, a second cover 656 and a third cover 658. As opposed to the previous embodiments, the busbar cover 650 according to an embodiment of the present disclosure may include the third cover 658. The third cover 658 may bend from the lower portion of the first cover 652 and be disposed on the inner surface of the module case 200. The third cover 658 may have the same length as the first cover 652 in parallel to the first cover 652. Accordingly, at the upper end portion of the first cover 652, the second cover 656 may bend and extend to a predetermined length, and at the lower end portion of the first cover 652, the third cover 658 may bend and extend to a predetermined length. Through the structure of the first to third covers 652 to 658, a U-shaped structure may be formed.

The busbar cover 650 may allow the busbar frame 610 to be inserted and may be inserted into the inner surface of the module case 200. Accordingly, in an embodiment of the present disclosure, it may be possible to further simplify the coupling structure of the busbar cover 650 and the busbar frame 610.

Referring back to FIGS. 1 to 3, the battery module 10 may include an end plate 400.

A pair of end plates 400 may be provided, and may cover the busbar assembly 300 and be connected to two end portions of the module case 200. The pair of end plates 400 may form the appearance of the battery module 10 together with the module case 200. Additionally, the pair of end plates 400 may have, for example, a terminal connecting the busbar assembly 300 to an external electrical component.

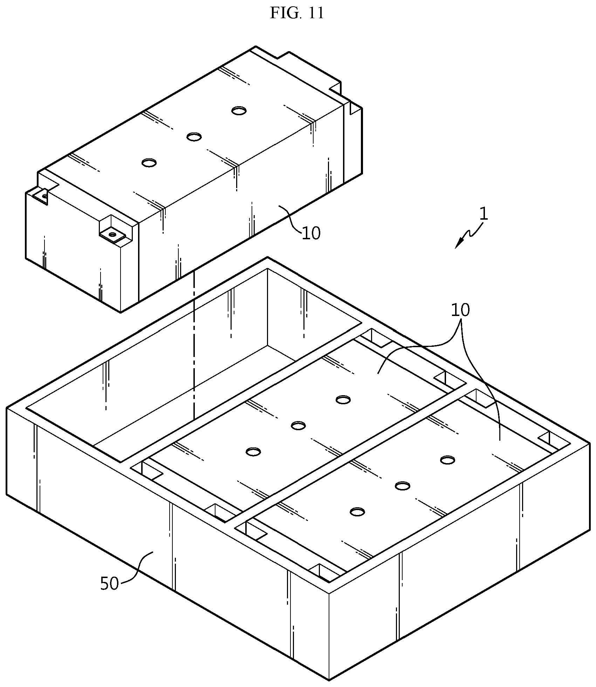

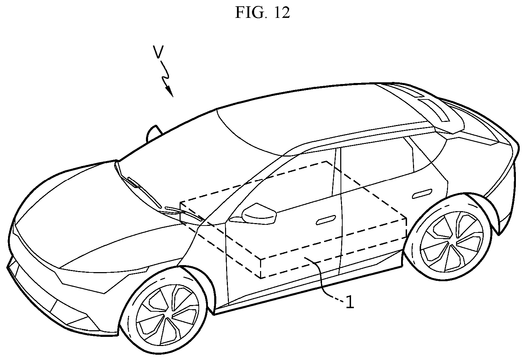

FIG. 11 is a diagram illustrating a battery pack 1 according to an embodiment of the present disclosure, and FIG. 12 is a diagram illustrating a vehicle V according to an embodiment of the present disclosure.

Referring to FIGS. 11 and 12, the battery pack 1 according to an embodiment of the present disclosure may include one or more battery modules 10 according to the previous embodiment and a pack case 50 accommodating the battery module 10.

The battery pack 1 may further include an electrical component such as a battery management system (BMS) to control the battery module 10 or a cooling unit such as a heat sink to cool down the battery module 10.

The battery pack 1 according to an embodiment of the present disclosure may further include any other components of the battery pack 1 known at the time the patent application was filed. For example, the battery pack 1 according to an embodiment of the present disclosure may further include a current sensor, a fuse, a service plug or any other components.

Additionally, the vehicle V according to an embodiment of the present disclosure may include at least one battery pack 1 according to the present disclosure. Additionally, in addition to the battery pack 1, the vehicle V according to an embodiment of the present disclosure may further include any other components included in vehicles. For example, in addition to the battery pack 1 according to an embodiment of the present disclosure, the vehicle V according to an embodiment of the present disclosure may further include a vehicle body, a motor, a control device such as an electronic control unit (ECU) or the like.

Additionally, the battery pack 1 according to an embodiment of the present disclosure may be provided in the vehicle V as well as other devices, apparatus and equipment using secondary batteries such as Energy Storage Systems.

Since the battery pack 1 and the vehicle V according to an embodiment of the present disclosure include the battery module 10 of the previous embodiment, it may be possible to ensure safety against thermal events in the battery pack 1 and the vehicle V.

According to the above-described embodiments, there may be provided the battery module 10 with improved safety against thermal events and the battery pack 1 and the vehicle V including the same.

While the exemplary embodiments of the present disclosure have been hereinabove illustrated and described, the present disclosure is not limited to the above-described particular embodiments, and it is apparent that a variety of modifications and changes may be made by those skilled in the art without departing from the claimed subject matter of the present disclosure set forth in the appended claims.

## Claims

1. A battery module (10), comprising:
a cell assembly (100) including a plurality of battery cells (110);
a module case (200) accommodating the cell assembly (100), and having a vent (205) to vent flames or gases; and
a busbar assembly (300) connected to the module case (200) at a first longitudinal (X direction) end of the module case (200) spaced apart from the vent (205), electrically connected to the plurality of battery cells (110), and configured to cover a portion of the cell assembly (100) in which electrode leads (113) of the battery cells (110) are disposed in the module case (200),
wherein the busbar assembly (300) includes:
a busbar frame (310) which allows the electrode leads (113) of the battery cells (110) to pass through, and faces the cell assembly (100);
a sensing busbar (330) disposed on one surface of the busbar frame (310), and connected to the electrode leads (113) of the battery cells (110); and
a busbar cover (350) perpendicular to said longitudinal direction, spaced apart from the vent (205), and configured to cover one surface of the busbar frame (310) and the portion of the cell assembly (100) adjacent to the busbar frame (310) in the module case (200)
wherein the busbar cover (350) includes:
a first cover (352) covering one surface of the busbar frame (310) perpendicular to said longitudinal direction; and
a second cover (356) bent in a perpendicular direction from the first cover (352) and covering a longitudinal portion of the cell assembly (100) adjacent to the busbar frame (310).

2. The battery module (10) according to claim 1, wherein the vent is disposed in an upper surface of the module case, and
wherein the busbar cover (350) is spaced apart from the vent (205) and covers an edge top at each longitudinal sides of the cell assembly (100).

3. The battery module (10) according to claim 1, wherein each of the plurality of battery cells (100) includes:
an electrode assembly (111);
a pair of electrode leads (113) connected to the electrode assembly (111), and connected to the sensing busbar (330); and
a cell case (115) including a case body (117) accommodating the electrode assembly (111) and a case terrace (119) extending from the case body (117), and from which the pair of electrode leads (113) extend, and
wherein a portion of the busbar cover (350) is disposed between the module case (200) and the case terraces (119) where the pair of electrode leads (113) of the plurality of battery cells (110) extend.

4. The battery module (100) according to claim 1, wherein the busbar cover (350) is made of a flame retardant plastic.

5. The battery module (10) according to claim 1, wherein the busbar cover (350) is hook-coupled or hinge-coupled to the busbar frame (310).

6. The battery module (10) according to claim 5, wherein the busbar cover (350) is hook-coupled to a top of the busbar frame (310).

7. The battery module (10) according to claim 5, wherein the busbar cover (350) is hinge-coupled to a bottom of the busbar frame (310).

8. A battery pack (1), comprising:
the battery module (10) according to any one of claims 1 to 7; and
a pack case (50) accommodating the battery module (10).

9. A vehicle (V) comprising the battery pack (1) according to claim 8.

## Patentansprüche

1. Batteriemodul (10), umfassend:
eine Zellenanordnung (100), die eine Vielzahl von Batteriezellen (110) enthält;
ein Modulgehäuse (200), das die Zellenanordnung (100) aufnimmt und eine Entlüftungsöffnung (205) zum Entlüften von Flammen oder Gasen aufweist; und
eine Sammelschienenanordnung (300), die mit dem Modulgehäuse (200) an einem ersten Längsende (X-Richtung) des Modulgehäuses (200) beabstandet von der Entlüftungsöffnung (205) verbunden ist, elektrisch mit der Vielzahl von Batteriezellen (110) verbunden ist und konfiguriert ist, um einen Abschnitt der Zellenanordnung (100) abzudecken, in dem Elektrodenableitungen (113) der Batteriezellen (110) im Modulgehäuse (200) angeordnet sind,
wobei die Sammelschienenanordnung (300) enthält:
einen Sammelschienenrahmen (310), der es ermöglicht, dass die Elektrodenableitungen (113) der Batteriezellen (110) durch ihn verlaufen, und der der Zellenanordnung (100) zugewandt ist;
eine Erfassungssammelschiene (330), die auf einer Oberfläche des Sammelschienenrahmens (310) angeordnet ist und mit den Elektrodenableitungen (113) der Batteriezellen (110) verbunden ist; und
eine Sammelschienenabdeckung (350), die senkrecht zu der Längsrichtung und beabstandet von der Entlüftungsöffnung (205) angeordnet ist und konfiguriert ist, um eine Oberfläche des Sammelschienenrahmens (310) und den Abschnitt der Zellenanordnung (100) neben dem Sammelschienenrahmen (310) im Modulgehäuse (200) abzudecken,
wobei die Sammelschienenabdeckung (350) enthält:
eine erste Abdeckung (352), die eine Oberfläche des Sammelschienenrahmens (310) senkrecht zu der Längsrichtung abdeckt; und
eine zweite Abdeckung (356), die von der ersten Abdeckung (352) aus in einer senkrechten Richtung gebogen ist und einen Längsabschnitt der Zellenanordnung (100) neben dem Sammelschienenrahmen (310) abdeckt.

2. Batteriemodul (10) nach Anspruch 1, wobei die Entlüftungsöffnung in einer oberen Oberfläche des Modulgehäuses angeordnet ist, und
wobei die Sammelschienenabdeckung (350) von der Entlüftungsöffnung (205) beabstandet ist und eine Oberkante an jeder Längsseite der Zellenanordnung (100) abdeckt.

3. Batteriemodul (10) nach Anspruch 1, wobei jede der Vielzahl von Batteriezellen (100) enthält:
eine Elektrodenanordnung (111);
ein Paar Elektrodenableitungen (113), die mit der Elektrodenanordnung (111) verbunden sind und mit der Erfassungssammelschiene (330) verbunden sind; und
ein Zellgehäuse (115), das einen Gehäusekörper (117) enthält, der die Elektrodenanordnung (111) aufnimmt, und eine Gehäuseterrasse (119), die sich von dem Gehäusekörper (117) erstreckt und von der sich das Paar Elektrodenableitungen (113) erstreckt, und
wobei ein Abschnitt der Sammelschienenabdeckung (350) zwischen dem Modulgehäuse (200) und den Gehäuseterrassen (119) angeordnet ist, wo sich das Paar Elektrodenableitungen (113) der Vielzahl von Batteriezellen (110) erstreckt.

4. Batteriemodul (100) nach Anspruch 1, wobei die Sammelschienenabdeckung (350) aus einem flammhemmenden Kunststoff hergestellt ist.

5. Batteriemodul (10) nach Anspruch 1, wobei die Sammelschienenabdeckung (350) über Haken oder über Scharniere mit dem Sammelschienenrahmen (310) gekoppelt ist.

6. Batteriemodul (10) nach Anspruch 5, wobei die Sammelschienenabdeckung (350) über Haken mit einer Oberseite des Sammelschienenrahmens (310) gekoppelt ist.

7. Batteriemodul (10) nach Anspruch 5, wobei die Sammelschienenabdeckung (350) über Scharniere mit einer Unterseite des Sammelschienenrahmens (310) gekoppelt ist.

8. Batteriepack (1), umfassend:
das Batteriemodul (10) nach einem der Ansprüche 1 bis 7; und
ein Packgehäuse (50), das das Batteriemodul (10) aufnimmt.

9. Fahrzeug (V), umfassend den Batteriepack (1) nach Anspruch 8.

## Revendications

1. Module de batterie (10), comprenant :
un ensemble de cellules (100) incluant une pluralité de cellules de batterie (110) ;
un boîtier de module (200) logeant l'ensemble de cellules (100), et ayant un évent (205) pour évacuer des flammes ou des gaz ; et
un ensemble de barres-bus (300) connecté au boîtier de module (200) à une première extrémité longitudinale (direction X) du boîtier de module (200) espacé de l'évent (205), connecté électriquement à la pluralité de cellules de batterie (110), et configuré pour couvrir une partie de l'ensemble de cellules (100) dans laquelle des bornes d'électrode (113) des cellules de batterie (110) sont disposées dans le boîtier de module (200),
dans lequel l'ensemble de barres-bus (300) inclut :
un cadre de barre-bus (310) qui permet aux bornes d'électrode (113) des cellules de batterie (110) de passer à travers, et fait face à l'ensemble de cellules (100) ;
une barre-busde détection (330) disposée sur une surface du cadre de barre-bus (310), et connectée aux bornes d'électrode (113) des cellules de batterie (110) ; et
un couvercle de barre-bus (350) perpendiculaire à ladite direction longitudinale, espacé de l'évent (205), et configuré pour couvrir une surface du cadre de barre-bus (310) et la partie de l'ensemble de cellules (100) adjacente au cadre de barre-bus (310) dans le boîtier de module (200)
dans lequel le couvercle de barre-bus (350) inclut :
un premier couvercle (352) couvrant une surface du cadre de barre-bus (310) perpendiculaire à ladite direction longitudinale ; et
un second couvercle (356) plié dans une direction perpendiculaire depuis le premier couvercle (352) et couvrant une partie longitudinale de l'ensemble de cellules (100) adjacente au cadre de barre-bus (310).

2. Le module de batterie (10) selon la revendication 1, dans lequel l'évent est disposé dans une surface supérieure du boîtier de module, et
dans lequel le couvercle de barre-bus (350) est espacé de l'évent (205) et couvre un sommet de bord au niveau de chaque côté longitudinal de l'ensemble de cellules (100).

3. Le module de batterie (10) selon la revendication 1, dans lequel chacune de la pluralité de cellules de batterie (100) inclut :
un ensemble d'électrodes (111) ;
une paire de bornes d'électrode (113) connectées à l'ensemble d'électrodes (111), et connectées à la barre-bus de détection (330) ; et
un boîtier de cellule (115) incluant un corps de boîtier (117) logeant l'ensemble d'électrodes (111) et une terrasse de boîtier (119) s'étendant depuis le corps de boîtier (117), et depuis laquelle la paire de bornes d'électrode (113) s'étend, et
dans lequel une partie du couvercle de barre-bus (350) est disposée entre le boîtier de module (200) et les terrasses de boîtier (119) où la paire de bornes d'électrode (113) de la pluralité de cellules de batterie (110) s'étend.

4. Le module de batterie (100) selon la revendication 1, dans lequel le couvercle de barre-bus (350) est fait d'un plastique ignifuge.

5. Le module de batterie (10) selon la revendication 1, dans lequel le couvercle de barre-bus (350) est couplé par crochet ou couplé par charnière au cadre de barre-bus (310).

6. Le module de batterie (10) selon la revendication 5, dans lequel le couvercle de barre-bus (350) est couplé par crochet à une partie supérieure du cadre de barre-bus (310).

7. Le module de batterie (10) selon la revendication 5, dans lequel le couvercle de barre-bus (350) est couplé par charnière à une partie inférieure du cadre de barre-bus (310).

8. Bloc-batterie (1), comprenant :
le module de batterie (10) selon l'une quelconque des revendications 1 à 7 ; et
un boîtier de bloc (50) logeant le module de batterie (10).

9. Véhicule (V) comprenant le bloc-batterie (1) selon la revendication 8.
